# EUROPEAN PATENT APPLICATION

(11) **EP 3 530 509 A1**
(43) Date of publication of application: **28.08.2019**
(21) Application number: 18159003.5
(22) Date of filing: 27.02.2018
(51) Int. Cl.: B60K 1/00, F16H 3/091, F16H 48/40, F16H 48/42, F16H 48/08, F16H 48/10

(54) **A MOTOR VEHICLE DIFFERENTIAL WITH A RANGE SELECTOR DEVICE**

(71) Applicant: FCA Italy S.p.A., 10135 Torino (IT)
(72) Inventor: CONSANI, Mr. Marco, I-10135 Torino (IT); PREGNOLATO, Mr. Gianluigi, I-10135 Torino (IT)
(74) Representative: De Bonis, Paolo

(57) **Abstract**

Described herein is a motor-vehicle differential (1) comprising an epicyclic unit (2), the epicyclic unit (2) including:
- a first sun gear (8), which is rotatable about a first axis of rotation (X1) and can be connected to a first output shaft (S1);
- a second sun gear (10) coaxial to the first sun gear (8), which is rotatable about the first axis of rotation (X1) and can be connected to a second output shaft (S2); and
- a first planetary unit (11) meshing with said first sun gear (8) and said second sun gear (10), said first planetary unit (11) being carried by a planet carrier (12), which is rotatable about the first axis of rotation (X1).

The differential (1) includes a range-selector unit (4), which enables selection between a low gear range, for pulling off, and a travelling/cruise gear range.

## Description

### Field of the invention

The present invention relates to differentials for motor vehicles.

### Prior art and general technical problem

The solutions currently adopted in the design of a motor-vehicle transmission envisage - to a variable extent but, however, in a concordant way - providing a first gear ratio sufficiently short as to enable the vehicle to pull off easily even in conditions of heavy load (for example, on a steep slope and/or with the vehicle heavily loaded).

However, there is a limit for the transmission ratio of the first gear that cannot be exceeded for constructional reasons and/or for reasons linked to driveability of the vehicle. In fact, the adoption of an excessively short first gear ratio results in an excessively marked step in speed with respect to the second gear ratio as a result of the fact that the second gear ratio - and along with it, the subsequent ratios - cannot in any case be excessively short (i.e., with marked gear reductions). This has a negative impact on the driveability of the vehicle, since the driver, after passage from the first gear to the second gear, finds himself instantaneously with the engine in operating conditions (as regards load and r.p.m.) that are not optimal, or at least not comparable with the ones that correspond to the first gear when pulling off.

On the other hand, the ever-increasing need for containment of fuel consumption calls for the adoption of sufficiently long forward gear ratios, in such a way as to lower the engine speed given the same travelling and/or cruising speed. This is clearly impracticable for the first gear ratio, because otherwise there would be modest levels of performance when pulling off. This means that in any case the first gear ratio limits the benefit that can be achieved as regards fuel consumption, since the compromise solution that derives from the current constraints results in a ratio that is in any case too short in the perspective of a reduction of consumption levels, and still too long for the most problematical starting manoeuvres, especially for vehicles for off-road use.

### Object of the invention

The object of the present invention is to solve the technical problems mentioned previously.

In particular, the object of the invention is to reconcile the requirements of starting in burdensome conditions with the requirements of reduction of consumption levels.

### Summary of the invention

The object of the present invention is achieved by a motor-vehicle differential having the features forming the subject of one or more of the appended claims, which form an integral part of the technical disclosure provided herein in relation to the invention.

In particular, the object of the invention is achieved by a motor-vehicle differential comprising an epicyclic unit, the epicyclic unit including:
- a first sun gear, which is rotatable about a first axis of rotation and can be connected to a first output shaft;
- a second sun gear coaxial to the first sun gear, which is rotatable about the first axis of rotation and can be connected to a second output shaft; and
- a first planetary unit, meshing with said first sun gear and said second sun gear, said first planetary unit being carried by a planet carrier, which is rotatable about the first axis of rotation,
the differential being characterized in that it includes a range-selector unit, said range-selector unit comprising:
- a power-takeoff unit, which is mounted rotatable about said first axis of rotation and coaxial to said planetary unit, said power-takeoff unit including a first gear wheel that can be coupled to an input shaft, a second gear wheel, and a third gear wheel, said first gear wheel, said second gear wheel, and said third gear wheel being connected in rotation;
- a transmission shaft, which is rotatable about a second axis of rotation parallel to the first axis of rotation;
- a fourth gear wheel, which meshes with said second gear wheel, thus defining a first transmission ratio, and a fifth gear wheel, which meshes with said third gear wheel, thus defining a second transmission ratio, different from said first transmission ratio, said fourth gear wheel and said fifth gear wheel being moreover mounted freely rotatable on said transmission shaft about said second axis of rotation;
- a sixth gear wheel, which is connected in rotation to the transmission shaft and meshes with a seventh gear wheel connected in rotation to said planet carrier; and
- an engagement device, which includes a first operating condition in which a connection in rotation is provided of the fourth gear wheel to the transmission shaft, and a second operating condition in which a connection in rotation is provided of the fifth gear wheel to the transmission shaft.

### Brief description of the drawings

The invention will now be described with reference to the annexed figure, which is provided purely by way of non-limiting example and which is a schematic illustration of a differential according to the invention.

### Detailed description

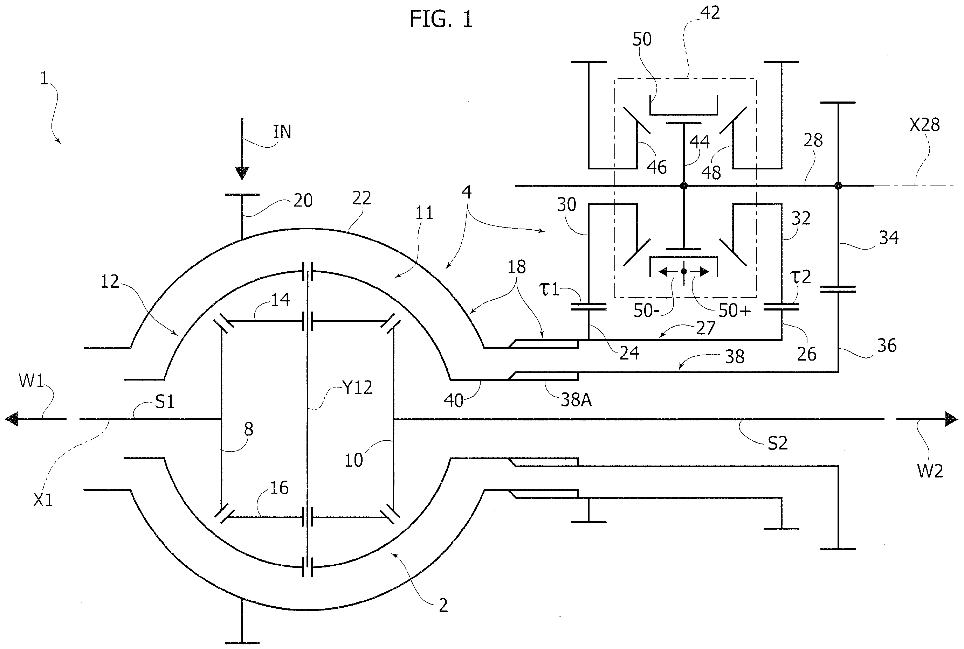

The reference number 1 in Figure 1 designates as a whole a motor-vehicle differential according to the invention. The differential 1 comprises an epicyclic unit 2 and a range-selector unit 4. The latter comprises various functional components and ensembles that will be described in detail in what follows.

The epicyclic unit 2 comprises a first sun gear 8 and a second sun gear 10, of identical diameter. The sun gears 8, 10 are mounted rotatably, and coaxially with respect to one another, about a first axis of rotation X1. The epicyclic unit 2 further comprises a planetary unit 11 that meshes with the sun gears 8, 10. The planetary unit 11 includes a planet carrier 12, which carries a first planetary gear 14 and a second planetary gear 16, which are also identical to one another and each mesh with the first sun gear 8 and the second sun gear 10. In this embodiment, the epicyclic unit 2 is of the type with bevel gears, so that both the sun gears 8, 10 and the planetary gears 14, 16 are conical. Consequently, the planetary gears 14, 16 are mounted rotatable about an axis Y12 orthogonal to the axis X1, the aforesaid axis being rotatable about the axis X1 in a way integral with the planet carrier 12.

In alternative embodiments, it in any case possible to envisage an epicyclic unit 2 provided with cylindrical gears.

The range-selector unit 4 comprises a power-takeoff unit 18, which is mounted rotatable about the first axis of rotation X1 in a way coaxial to the planetary unit 11. The power-takeoff unit 18 includes a first gear wheel 20, which is rotatable about the axis X1 and is configured for coupling with an input shaft of the differential 1.

The gear wheel 20, in the preferred embodiment illustrated in Figure 1, is fixed to a bell 22 that houses within it the entire epicyclic unit 2. The power-takeoff unit 18 further includes a second gear wheel 24 and a third gear wheel 26, wherein the first gear wheel 20, the second gear wheel 24, and the third gear wheel 26 are all rigidly connected together in rotation and are all coaxial to the axis X1, about which they are rotatable.

Specifically, the power-takeoff unit 18 is here provided in two parts, a first part comprising the bell 22, and a second part, which comprises a first sleeve 27 provided on which are the gear wheels 24, 26 (for example force-fitted thereon, provided integrally therewith, or fitted in some other way) and is connected in rotation to the bell 22 (i.e., to the first part) by means of a spline coupling 27A.

Forming part of the range-selector unit 4 is also a transmission shaft 28, which is mounted rotatable about a second axis of rotation X28, parallel to, and set at a distance from, the axis X1. Mounted freely rotatable (idle) on the transmission shaft 28 are a fourth gear wheel 30 and a fifth gear wheel 32, whereas a sixth gear wheel 34 is rigidly connected in rotation to the shaft 28 (i.e., it rotates integrally therewith).

The fourth gear wheel 30 meshes with the second gear wheel 24, thus defining a first transmission ratio τ1, and the fifth gear wheel 32 meshes with the third gear wheel 26, thus defining a second transmission ratio τ2, different from the first transmission ratio τ1. The transmission ratio τ1 is here conventionally defined as the ratio between the angular velocity of the fourth gear wheel 30 and the angular velocity of the second gear wheel 24 (or also, equivalently, as the ratio between the number of teeth of the gear wheel 24 and the number of teeth of the gear wheel 30), whilst, consistently, the second transmission ratio τ2 is defined as the ratio between the angular velocity of the fifth gear wheel 32 and the angular velocity of the third gear wheel 26 (or also, equivalently, as the ratio between the number of teeth of the gear wheel 26 and number of teeth of the gear wheel 32). The ratio τ1 is smaller than the ratio τ2, and in particular the ratio τ1 is less than unit (on the basis of the above convention), whereas the ratio τ2 may be lower than, equal to, or higher than unit (once again on the basis of the above convention), provided that the condition τ1 < τ2 is satisfied.

The sixth gear wheel 34 meshes with a seventh gear wheel 36, which is connected in rotation to the planet carrier 12 and is coaxial to the axis X1. In particular, for the planetary unit 11 a two-part structure is provided as well, wherein a first part includes the planet carrier 12 (and, in general, the epicyclic unit 2), whereas a second part includes a second sleeve 38 integral with the gear wheel 36 (made of a single piece, or else force fitted or fitted in any other way per se known). The sleeve 38 is connected in rotation to the planet carrier 12 by means of a spline coupling 38A that meshes with an axial extension 40 of the planet carrier 12. Moreover, in the preferred embodiment illustrated herein, the second sleeve 38 is set inside the first sleeve 27, with the seventh gear wheel 36 set outside in the axial direction with respect to the gear wheels 24 and 26.

An engagement device 42 completes the range-selector unit 4 and includes a first operating condition in which it provides a connection in rotation of the fourth gear wheel 30 to the transmission shaft 28, and a second operating condition in which it provides a connection in rotation of the fifth gear wheel 32 to the transmission shaft 28.

In the case in point, the engagement device 42 comprises a first element 44 connected in rotation to the transmission shaft 28, a second element 46 connected in rotation to the gear wheel 30, and a third element 48 connected in rotation to the gear wheel 32. The engagement device 42 further comprises a mobile element 50 configured for providing alternatively a coupling between the first element 44 and the second element 46 in the first operating condition of the device 42 (corresponding to which is a first operating position of the mobile element 50), and a coupling between the first element 44 and the third element 48 in the second operating condition of the engagement device 42 (corresponding to which is a second operating position of the mobile element 50).

By virtue of the (rigid) connection in rotation between the element 44 and the transmission shaft 28, when the element 44 is connected to one or the other of the elements 46, 48, the respective gear wheels 30, 32 are alternatively connected in rotation to the transmission shaft 28 itself.

The engagement device 42 is provided, in one embodiment, as a synchronizer with conical elements. The first element 44 of the engagement device 42 is a hub of the synchronizer including an external peripheral toothing. The second element 46 of the engagement device 42 is a first synchronization cone and, in the light of what has been described, is connected in rotation to the fourth gear wheel 30.

The third element 48 of the engagement device 42 is a second synchronization cone and, in the light of what has been described, is connected in rotation to the fifth gear wheel 32.

A first (conical) synchronizer ring is moreover set between the hub 44 and the first synchronization cone 46, and a second synchronizer ring is set between the hub 44 and the second synchronization cone 48.

The mobile element 50 is a sleeve member connected in rotation to the hub 44 by means of an internal grooved profile that engages an external grooved profile of the hub 44, and is axially mobile with respect to the hub 44 in the directions 50- and 50+ visible in Figure 1.

In an alternative embodiment, the engagement device 42 is provided as an engagement device with front teeth (of the so-called dog-clutch type) where the elements 46, 48 are provided as collars with a ring of front teeth (arranged aligned in directions parallel to the axis X1), whereas the element 44 also functions as moving element. In particular, in a way per se known, the element 44 is provided as a sleeve, which is connected in rotation to the transmission shaft 28 (but is axially movable along it) and bears on the periphery a profile that can be coupled with an actuator element (typically, a groove that can be coupled with an actuation fork), whereas on opposite faces in an axial direction two front toothings are provided configured for engaging, respectively, the front toothings of the elements 46 and 48 upon movement of the element 44 towards the corresponding elements.

Operation of the differential 1 will now be described.

The differential 1 is configured for installation on board a motor vehicle either as front differential or as rear differential. Input of the motion to the differential 1 occurs through the gear wheel 20 (reference IN), which receives the motion from an output shaft of the gearbox - in the case of use as front differential - or else from a transmission shaft coming from a central differential or from a power takeoff in the case of use as rear differential.

The gear wheel 20 is hence driven in rotation about the axis X1, and the bell 22 rotates integrally therewith. The rotational motion about the axis X1 is transmitted via the bell 22 and the spline coupling 27A to the second and third gear wheels 24, 26 and from these to the gears 30, 32 of the range-selector device 4.

In the first operating condition of the engagement device 42 (corresponding, actually, to a first operating condition of the entire range selector 4) the connection in rotation of the gear wheel 30 to the transmission shaft 28 transfers the motion coming from the gear wheel 20 and from the kinematic chain downstream thereof through the gear wheel 30 itself. This condition is provided by displacing the moving element 50 in the direction indicated by the reference 50- in Figure 1.

This means that the motion is transmitted from the gear wheel 24 to the gear wheel 30, and from this to the transmission shaft 28 and to the gear 34. From the latter the motion is transmitted to the gear 36 and to the planet carrier 12 via the sleeve 38, the spline coupling 38A, and the axial extension 40. Via the planet carrier 12, the motion is finally transmitted to the sun gears 8, 10 and to the output shafts S1 and S2 connected in rotation to the sun gears 8, 10 themselves.

It will hence be appreciated that, unlike a conventional differential, transmission of motion from the gear 20 to the planet carrier 12 occurs through the transmission ratio τ1 (as well as the transmission ratio existing between the gear wheels 36 and 34). Since the transmission ratio τ1 is less than the transmission ratio τ2, the first operating condition of the engagement device 42 (and of the range selector 4) corresponds to selection of a low gear range (or, more simply, low range), with consequent multiplication of the torque transmitted to the planet carrier 12 and to the wheels of the vehicle.

In the second operating condition of the engagement device 42 (corresponding actually to a second operating condition of the entire range selector 4) connection in rotation of the gear wheel 32 to the transmission shaft 28 transfers the motion coming from the gear wheel 20 and from the kinematic chain downstream thereof through the gear wheel 32 itself. This condition is provided by displacing the moving element 50 in the direction indicated by the reference 50+ in Figure 1.

This means that the motion is transmitted from the gear wheel 26 to the gear wheel 32, and from this to the transmission shaft 28 and to the gear wheel 34. From the latter the motion is transmitted to the gear wheel 36 and to the planet carrier 12 via the sleeve 38, the spline coupling 38A, and the extension 40. Via the planet carrier 12, the motion is finally transmitted to the sun gears 8, 10 and to the output shafts S1 and S2 connected in rotation to the sun gears 8, 10 themselves.

It will be appreciated, however, that transmission of motion from the gear wheel 20 to the planet carrier 12 occurs in this case through the filter constituted by the transmission ratio τ2 (in addition, clearly, to the filter constituted by the transmission ratio between the gears 34, 36), and no longer by the transmission ratio τ1.

Given that the transmission ratio τ2 is higher than the transmission ratio τ1, selection of the second operating condition of the engagement device 42/range selector 4 corresponds to selection of a travelling/cruise gear range.

Both of the operating conditions of the engagement device 42 - and consequently of the differential 1 - can be selected by means of a manual control, which is located in the passenger compartment of the vehicle and can be operated by the driver, or automatically by means of an electronic control unit.

Selection of the first operating condition is, however, subject to certain conditions outlined hereinafter. Preferably, the control strategy is configured in such a way that the non-observance of at least one of the conditions results in preclusion of the selection itself or else automatic passage to the first operating condition of the engagement device 42.

The above conditions include:
i) selection of the first forward gear or of the reverse gear;
ii) vehicle speed lower than a threshold speed.

In particular, the second condition is decisive: selection of this condition reduces further the transmission ratio between the engine and the wheels (understood as the ratio between the rotational speed of the wheels and the engine speed; in a dual way, it can be said that activation of the first condition will increase the reduction ratio - which is the inverse of the aforementioned ratio), with consequent risk of serious damage to the engine and to the transmission in the case where the vehicle speed were to exceed the threshold mentioned above. Preferably, the threshold can be set between 25 km/h and 45 km/h according to the features of the engine and transmission. A preferred threshold value corresponds to 35 km/h (approximately 22 mph).

Accessory conditions may moreover be envisaged, such as the fact that the vehicle is in pulling-off conditions, possibly combined with a slope threshold applying to the terrain on which the vehicle is travelling.

Subject to the above conditions, in the case where the driver and/or the control unit do/does not select the first operating condition, the engagement device 42 is constantly kept in the second operating condition - whatever the forward gear ratio selected - to enable transmission of motion from the engine to the wheels of the vehicle.

In general, for transmission of motion to be obtained, either one or the other operating condition of the device 42 must be selected. Otherwise (engagement device 42 in the neutral position), input of the motion from the gear wheel 20 only causes an idle rotation of the gear wheels 30 and 32, without transmission of torque to the planet carrier 12.

Thanks to the differential 1, it becomes possible to manage setting off in extremely burdensome conditions both in the case of forward setting off and in the case of setting off in reverse: this is possible with selection of the first operating condition of the engagement device 42. Once there is no longer the need to set off, it is possible to switch the differential 1 into an operating condition with a higher-range transmission ratio (τ2), thus reducing fuel consumption.

In fact, thanks to the presence of the range-selector device 4, it is possible to choose a longer ratio for all the forward gears of the gearbox of the vehicle, including the first gear and the reverse gear. In the event of burdensome setting off conditions, it is sufficient to select the first operating condition, switching the range selector 4 into the second condition when the set off manoeuvre is completed. Basically, the range selector 4 - by substantially enabling variation of the transmission ratio inside the differential 1 - decouples design of the gearbox from the requirements linked to setting off, thus widening the margin of freedom that can be exploited for reducing consumption levels.

In addition to the above, by shifting the design constraints linked to setting off from the gearbox to the differential, it becomes possible to provide the gearbox with a smoother progression of the gear ratios, without sharp steps in speed between the first gear and the subsequent gears (in particular, the second gear).

Of course, the details of construction and the embodiments may vary widely with respect to what has been described and illustrated, without thereby departing from the scope of the present invention, as defined by the annexed claims.

## Claims

1. A motor-vehicle differential (1) comprising an epicyclic unit (2), the epicyclic unit (2) including:
- a first sun gear (8), which is rotatable about a first axis of rotation (X1) and can be connected to a first output shaft (S1);
- a second sun gear (10) coaxial to the first sun gear (8), which is rotatable about the first axis of rotation (X1) and can be connected to a second output shaft (S2); and
- a first planetary unit (11) meshing with said first sun gear (8) and said second sun gear (10), said first planetary unit (11) being carried by a planet carrier (12) so that it can rotate about the first axis of rotation (X1),
the differential (1) being **characterized in that** it includes a range-selector unit (4), said range-selector unit (4) comprising:
- a power-takeoff unit (18), which is mounted rotatable about said first axis of rotation (X1) and coaxial to said planetary unit (11), said power-takeoff unit (18) including a first gear wheel (20), which can be coupled with an input shaft, a second gear wheel (24), and a third gear wheel (26), said first gear wheel (20), said second gear wheel (24), and said third gear wheel (26) being connected in rotation;
- a transmission shaft (28), which is rotatable about a second axis of rotation (X28) parallel to the first axis of rotation (X1);
- a fourth gear wheel (30), which meshes with said second gear wheel (24), thus defining a first transmission ratio (τ1), and a fifth gear wheel (32), which meshes with said third gear wheel (26), thus defining a second transmission ratio (τ2), different from said first transmission ratio (τ1), said fourth gear wheel (30) and said fifth gear wheel (32) being moreover mounted freely rotatable on said transmission shaft (28) about said second axis of rotation (X28);
- a sixth gear wheel (34), which is connected in rotation to the transmission shaft (28) and meshes with a seventh gear wheel (36) connected in rotation to said planet carrier (12); and
- an engagement device (42), which includes a first operating condition (50-) wherein a connection in rotation is provided of the fourth gear wheel (30) to the transmission shaft (28), and a second operating condition wherein a connection in rotation is provided of the fifth gear wheel (32) to the transmission shaft (28).

2. The differential (1) according to Claim 1, wherein said power-takeoff unit (18) comprises a bell (22), which houses said epicyclic unit (2) and carries said first gear wheel (20), and a first sleeve (27) provided on which are said second gear wheel (30) and said third gear wheel (32), said sleeve (27) being connected in rotation to said bell (22, 27A).

3. The differential (1) according to Claim 2, comprising a second sleeve (38) provided on which is said seventh gear wheel (36), said second sleeve (38) being connected in rotation (38A) to said planet carrier (12) and being coaxial to said first sleeve (27).

4. The differential (1) according to Claim 3, wherein said second sleeve (38) is set inside said first sleeve (27), with said seventh gear wheel (36) set outside in the axial direction with respect to said second gear wheel (24) and said third gear wheel (26).

5. The differential (1) according to any one of the preceding claims, wherein the engagement device (42) includes a first element (44), a second element (46), and a third element (48), wherein said first element (44) is connected in rotation to said transmission shaft (28), said second element (46) is connected in rotation to said fourth gear wheel (30), and said third element (48) is connected in rotation to said fifth gear wheel (32).

6. The differential according to Claim 5, wherein the engagement device further comprises a mobile element (50), the mobile element comprising a first operating position in which it provides a coupling of said first element (44) to said second element (46), and a second operating position in which it provides a coupling of said first element (44) to the third element (48).

7. The differential (1) according to Claim 6, wherein said engagement device (42) is a synchronizer with conical elements, wherein:
- the first element (44) of the engagement device (42) is a hub of said synchronizer;
- the second element (46) of the engagement device (42) is a first synchronization cone;
- the third element (48) of the engagement device (42) is a second synchronization cone; and
- the mobile element (50) is a sleeve member connected in rotation to said hub (44) and axially movable with respect thereto.

8. The differential (1) according to Claim 7, wherein a first synchronizer ring is set between said hub (44) and said first synchronization cone (46), and wherein a second synchronizer ring is set between said hub (44) and said second synchronization cone (48).

9. The differential according to Claim 6, wherein said engagement device (42) is an engagement device with front teeth in which:
- the second element (46) and the third element (48) of the engagement device (42) are provided as collars with a ring of front teeth; and
- the first element (44) of the engagement device is connected in rotation to said transmission shaft (28) and further includes front toothings configured for engaging, respectively, the front toothings of the second element (46) and of the third element (48), said first element (44) moreover constituting the mobile element of the engagement device (42).

10. The differential (1) according to any one of the preceding claims, wherein said epicyclic unit (2) is of the type with bevel gears.

11. The differential according to Claim 10, wherein said first sun gear (8) and said second sun gear (10) are identical bevel gears meshing with a first planetary gear (14) and a second planetary gear (16), which are mounted rotatable about a third axis of rotation (Y12), which is orthogonal to the first axis of rotation (X1) and is rotatable, with said planet carrier (12), about said first axis of rotation (X1).

12. The differential according to Claim 1, wherein said first transmission ratio (τ1), defined as ratio between an angular velocity of said fourth gear wheel (30) and an angular velocity of said second gear wheel (24), is less than unit, and wherein said second transmission ratio (τ2), defined as ratio between an angular velocity of said fifth gear wheel (32) and an angular velocity of said third gear wheel (26), is lower than, equal to, or higher than unit, the first transmission ratio (τ1) being lower than the second transmission ratio (τ2).
